# EUROPÄISCHE PATENTSCHRIFT

(11) **EP 0 662 336 B1**
(45) Veröffentlichungstag und Bekanntmachung des Hinweises auf die Patenterteilung: **22.04.1998**
(21) Anmeldenummer: 94115166.4
(22) Anmeldetag: 27.09.1994
(51) Int. Cl.: B01D 33/073, B01D 33/44

(54) **Rückspülbares Filter für Flüssigkeiten**
Back-washing filter for liquids
Filtre de rinçage à contre-courant pour liquides

(30) Priorität: 11.01.1994 DE 4400485
(43) Veröffentlichungstag der Anmeldung: 12.07.1995
(73) Patentinhaber: FILTERWERK MANN & HUMMEL GmbH, 71638 Ludwigsburg (DE)
(72) Erfinder: Bartelt, Bertram, D-71711 Steinheim (DE); Gohle, Peter, D-71636 Ludwigsburg (DE); Schaal, Wolfgang, D-71522 Backnang (DE)
(74) Vertreter: Voth, Gerhard, Dipl.-Ing.

(56) Entgegenhaltungen:
- EP-A- 0 049 746
- DE-A- 3 209 216
- DE-A- 4 222 495
- DE-U- 9 209 856

## Beschreibung

Die Erfindung betrifft ein rückspülbares Filter für Flüssigkeiten.

Aus der DE-C-32 09 216 ist ein abschnittsweise rückspülbares Flüssigkeitsfilter bekannt, bei dem ein hohlzylindrisches Filterelement vorgesehen ist. Dieses trennt innerhalb eines Filtergehäuses einen Filtratraum von einem Schmutzflüssigkeitsraum ab. Das Flüssigkeitsfilter enthält ferner eine Schmutzabfuhrrinne, die parallel zur Achse des Filterelementes angeordnet ist und einen U-förmigen Querschnitt aufweist.

Zum Abreinigen der Oberfläche des Flüssigkeitsfilters wird dieser um seine Achse gedreht und der Schmutzabfuhrkanal geöffnet, so daß aufgrund des im Inneren des hohlzylindrischen Filterelementes herrschenden Drucks Flüssigkeit durch das an der Oberfläche des Filterelementes angeordnete Filtergewebe strömt. Die an dem Filtergewebe anhaftenden Partikel werden durch die Strömung mitgenommen und über einen Schmutzabfuhrkanal abgeleitet.

Normalerweise läßt sich die Größe der in der zu reinigenden Flüssigkeit enthaltenen Partikel nicht exakt definieren. So können unter Umständen auch Partikel angeschwemmt werden, die ein Mehrfaches der Filterspaltweite aufweisen. Die Abreinigung solcher Partikel mit der bekannten Rückspüleinrichtung wird dadurch erschwert, daß diese Rückspüleinrichtung einerseits einen möglichst geschlossenen und nur zu dem Filterbereich geöffneten U-förmigen Querschnitt aufweist, andererseits aber auch größere Partikel am Umfang des Filterelementes in die Schmutzabfuhrrinne hineingelangen sollen. Dadurch ergibt sich an der Vorderkante der Schmutzabfuhrrinne ein nicht unerheblicher Spalt, durch den aus dem Schmutzflüssigkeitsraum Flüssigkeit in die Schmutzabfuhrrinne gelangt. Damit wird die Rückspülwirkung an dem Filterelement wesentlich herabgesetzt.

Es ist weiterhin aus der EP-B-00 49 746 ein Spaltfilter für Schmieröl bekannt, welches mit einem Reinigungselement versehen ist. Das Reinigungselement weist einen Spülkanal auf und besitzt zum einen zu der Filteroberfläche hin gewandte Öffnungen zum Rückspülen des Spaltfilters sowie einen Eintrittsspalt zum Vorreinigen der Filteroberfläche. Mit diesem Reinigungselement soll damit zum einen Grobschmutz mittels des Eintrittspalts entfernt werden, sowie der in den Filterspalten angelagerte Schmutz über die Rückspülöffnungen.

Ein Nachteil dieses Systems besteht darin, daß durch die Anordnung des Eintrittsspalts für Grobschmutz die Rückspülwirkung sehr stark vermindert wird.

Das Reinigungselement, das zwar eine kompakte Kombination darstellt, hat jedoch den Nachteil, daß Schmutz unterschiedlicher Zusammensetzung nicht wirksam entfernt werden kann. So ist einerseits der Eintrittsspalt möglichst klein zu halten, um die Rückspülwirkung nicht unnötig zu beeinflussen. Andererseits hat ein kleinerer Eintrittsspalt den Nachteil, daß Grobschmutz sich vor dem Reinigungsspalt ablagert und nicht mit ausgetragen werden kann.

Die geringe Rückspülwirkung des Reinigungselements wird dadurch noch weiter herabgesetzt, daß ein sehr breiter Umfangsbereich des Filters rückgespült wird und sich damit die Geschwindigkeit der Rückspülströmung stark verringert.

Der Erfindung liegt deshalb die Aufgabe zugrunde, ein rückspülbares Filter zu schaffen, das die genannten Nachteile vermeidet und bei dem eine sektorielle Abreinigung mit hoher Effizienz erfolgt.

Diese Aufgabe wird durch die Merkmale des Anspruchs 1 gelöst.

Ein wesentlicher Vorteil der Erfindung ist darin zu sehen, daß nunmehr eine zweistufige Abreinigung der Oberfläche des Filterelementes erfolgt. Zunächst wird die Oberfläche mit dem federnd vorgelagerten Abstreifer von grobem Oberflächenschmutz gereinigt. Dadurch wird gewährleistet, daß der Schmutzabfuhrkanal unmittelbar und ohne einen Umgehungsspalt für die Schmutzflüssigkeit zu bilden, an dem Filterelement anliegt. Der restliche am Filterelement und vor allem in den sehr feinen Filteröffnungen festsitzende Schmutz kann dann mittels Rückspülflüssigkeit durch eine Öffnung in den Schmutzabfuhrkanal gelangen. Es ist verständlich, daß gerade eine kleine Öffnung den Vorteil hat, zur Rückspülung des Filterelementes nur wenig Rückspülflüssigkeit zu benötigen.

Außerdem wird eine hohe Geschwindigkeit der Rückspülströmung erzeugt und damit durch die größere kinetische Energie eine bessere Reinigungswirkung erzielt.

Die effiziente Abreinigung wird auch dadurch erzielt, daß die schlitzförmigen Öffnungen sich durch den Rückspüldruck vergrößern und damit Schmutzpartikel, die sich an dem Spalt, also an den schlitzförmigen Öffnungen angelagert haben, entfernt werden können. Dieser neuartige Filterkörper hat damit den Vorteil, daß selbst hartnäckig anhaftender oder in den Öffnungen angelagerter Schmutz problemlos entfernt werden kann. Selbstverständlich ist das erfindungsgemäße Filter auch in der Lage, Luft oder Gase zu reinigen. Gerade durch die Möglichkeit, sehr kleine Filterspaltweiten zu realisieren, läßt sich das Filter in vorteilhafter Weise zur Entstaubung von Luft einsetzen.

Gemäß einer Ausgestaltung der Erfindung besteht die Öffnung zur Oberfläche des Filterelements aus einer parallel zur Achse des Filterelements durchlaufende Nut. Die Breite der Nut ist maßgebend für die erforderliche Rückspülflüssigkeitsmenge und kann aufgrund der Vorreinigung sehr schmal eingestellt werden.

In einer weiteren Ausgestaltung ist vorgesehen, diese Nut mittels Stützen am rückwärtigen Ende des Schmutzabfuhrkanals abzusichern. Diese Stützen verhindern ein Verformen des Schmutzabfuhrkanals im Bereich dieser Nut.

Eine alternative Ausgestaltung der Öffnung zu der Oberfläche des Filterelementes sieht vor, mehrere in Umfangsrichtung versetzt angeordnete Nuten, die ebenfalls parallel zur Achse des Filterelementes verlaufen, anzuordnen. Durch die versetzte Anordnung der Nuten wird eine stabile Anlagefläche des Schmutzabfuhrkanals an der Oberfläche des Filterelementes erzielt.

Gemäß einer Ausgestaltung der Erfindung ist der vorgelagerte Abstreifer ein Federstahlblech, dessen Kontaktfläche auf der Oberfläche des Filterelementes parallel zur Achse des Filterelementes verläuft. Dieses Federstahlblech kann mit einer Messerschneide versehen sein. Diese Messerschneide dient dazu, Fasern oder Schmutzpartikel, die sehr fest auf der Oberfläche des Filterelementes anhaften, abzuscheren.

Eine zu dem Federstahlblech alternative Ausgestaltung der Erfindung ist darin zu sehen, daß der Abstreifer ein keilförmiges Element ist, welches unmittelbar in die Rückspüleinrichtung integriert ist. In diesem Fall ist die Rückspüleinrichtung zweckmäßigerweise in radialer Richtung federnd gelagert. Über eine Feder wird eine Kraft auf den Abstreifer in Richtung des Filterelementes erzeugt. Durch die federnde Lagerung der Rückspüleinrichtung wird außerdem in vorteilhafter Weise der Zufluß von Schmutzflüssigkeit in den Schmutzabfuhrkanal über den Spalt zwischen Rückspüleinrichtung und Oberfläche des Filterelementes wirksam verhindert.

Ein weiterer Vorteil der Erfindung ist darin zu sehen, daß die schlitzförmigen Öffnungen einfach und wirtschaftlich herstellbar sind. Außerdem können diese schlitzförmigen Öffnungen konisch ausgebildet werden, d.h. die Schlitzfläche erweitert sich in Richtung des Reinflüssigkeitsraums. Damit wird der Gefahr des Verstopfens der Schlitze durch Schmutzpartikel wirksam begegnet und das Abreinigen durch die düsenartige Ausgestaltung der Schlitze wesentlich verbessert.

Der Vorteil der Erfindung gemäß einer weiteren Ausgestaltung besteht darin, daß der Filterkörper nunmehr mit Elementen versehen ist, die einerseits beim Filtrieren von Flüssigkeit eine bestimmte Spaltbreite aufweisen, andererseits durch einen Rückspüldruck dieser Spalt vergrößert wird und damit Schmutzpartikel, die sich an dem Spalt, also an den schlitzförmigen Öffnungen angelagert haben, entfernt werden.

Gemäß einer weiteren Ausgestaltung der Erfindung wird vorgeschlagen, die Breite der Federzunge so zu gestalten, daß die Länge der schlitzförmigen Öffnung möglichst groß ist und die Feder gleichzeitig eine geringe Federkonstante aufweist. Dies wird dadurch erzielt, daß die Breite der Federzunge zur Zungenwurzel hin abnimmt.
Ein besonders vorteilhaftes Verfahren zur Herstellung des Flüssigkeitsfilters beschreibt Anspruch 11. Nach diesem Verfahren werden die schlitzförmigen Öffnungen mittels Laserstrahl aus dem Filterkörper herausgeschnitten. Selbstverständlich sind auch andere Herstellverfahren, wie z.B. das Ausstanzen oder das Ätzen der schlitzförmigen Öffnungen denkbar.

Die Abstützung der Federzungen kann zweckmäßigerweise mit einer Drahtwicklung erfolgen, wobei die Filterplatte an dieser Drahtwicklung anliegt. Es besteht auch die Möglichkeit, einen Stützkorb oder ein Lochblech zur Abstützung der Federzungen zu benutzen.

Ein vorteilhaftes Verfahren zum Rückspülen wird im Anspruch 12 dargestellt. Die Reinigung erfolgt dadurch, daß in der Schmutzabfuhrrinne ein gegenüber dem Reinflüssigkeitsraum geringerer Druck herrscht. Damit öffnen sich die Federzungen aus ihrer Normallage in Richtung Schmutzabfuhrkanal und vergrößern die schlitzförmigen Öffnungen. Die von der Reinseite in den Schmutzabfuhrkanal gelangende Flüssigkeit spült die Schmutzpartikel aus den schlitzförmigen Öffnungen. Durch die Rückseite der Rückspüleinrichtung werden die Federzungen wieder in ihre Normallage geführt.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.
Die Erfindung wird nachfolgend anhand von Ausführungsbeispielen näher dargestellt. Es zeigt:
- Figur 1, 1a: die Darstellung filterwirksamer Federzungen
- Figur 2: die Schnittdarstellung eines Flüssigkeitsfilters und die Gestaltung eines Filterelements
- Figur 3: eine Detaildarstellung einer Rückspüleinrichtung
- Figur 4: eine Variante einer Rückspüleinrichtung gemäß Figur 2
- Figur 5a - d: Schnittdarstellungen von Federzungen mit Eigenabstützung

Spaltfilter eignen sich zum Filtern stark verschmutzter Flüssigkeiten aller Art. Sie werden verwendet zur Filtrierung von Schmieröl und Kraftstoff bei mittleren bis großen Verbrennungsmotoren, bei Dampf- und Wasserkraftmaschinen, Pumpen, Hydraulikanlagen, Werkzeugmaschinen und Getrieben. Bei der Reinigung von Wasser und Flüssigkeiten der chemischen Verfahrenstechnik sowie bei der Aufbereitung von Kühlschmierstoffen gelangen diese Filter ebenfalls zur Anwendung. Spaltfilter werden normalerweise im Hauptstrom verwendet, d.h., die gesamte zu reinigende Flüssigkeit wird durch das Filter geführt. Die Filtereinsätze werden von außen nach innen durchströmt. Die Filterfeinheit wird durch die Spaltweiten bestimmt. Bei Spaltweiten <50 µm und festem Schmutz ist trotz partieller Rückspülung eine Reinigung der Spalten nicht mehr möglich.

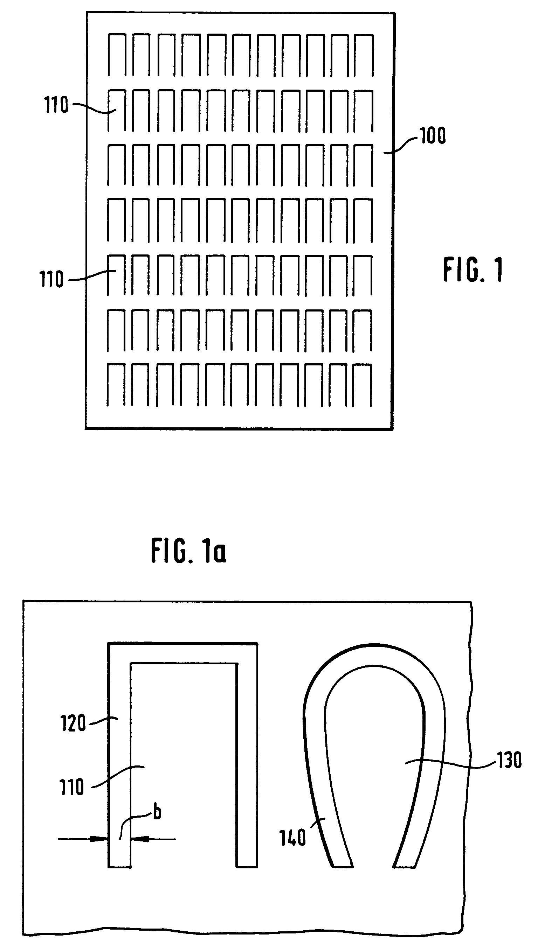

Ein Filterelement besteht gemäß Figur 1 aus einer dünnen Metallplatte 100. Diese ist mit einer Vielzahl von Federzungen 110 ausgestattet, wobei an drei Seiten jeder Federzunge sich eine schlitzförmige Öffnung befindet.

In Figur 1a ist eine vergrößerte Darstellung einer solchen Federzunge 110 gezeigt. Die Breite b der schlitzförmigen Öffnung 120 bestimmt dabei die Filterfeinheit. Eine Variante einer Federzunge ist in Figur 1a ebenfalls gezeigt. Die Federzunge 130 ist derart gestaltet, daß deren Breite zur Zungenwurzel hin abnimmt. Die Federzunge 130 wird ebenfalls von einer Öffnung 140 umgeben. Die Herstellung der schlitzförmigen Öffnungen und damit der Federzunge erfolgt beispielsweise durch Ätzen oder durch Schneiden mittels Laserstrahl.

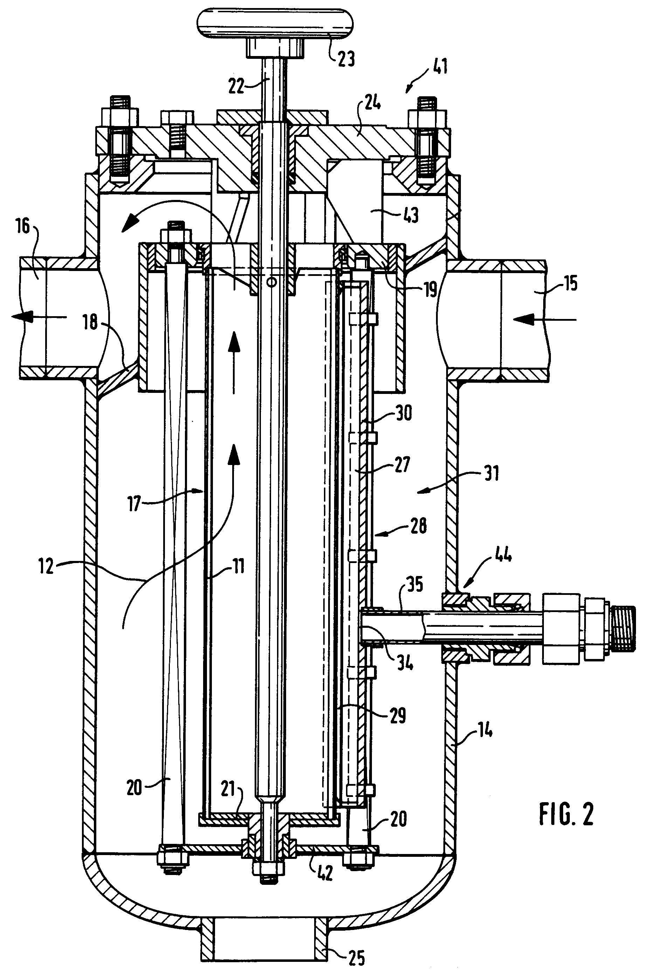

Bei einem Flüssigkeitsfilter, wie in Figur 2 dargestellt, ist das Filterelement auf einem Stützkorb bzw. auf Stützstäben 10 befestigt. Die Schmutzflüssigkeit strömt von außen in Richtung des Pfeils 12. Die Schmutzteilchen lagern sich an der Oberfläche des Filterelements 11 an. Die gereinigte Flüssigkeit wird durch den Innenraum des Filters abgeführt.

Zum Reinigen der Oberfläche des Filters ist das gesamte Filterelement drehbar in einem Gehäuse gelagert. Ein stationär angeordneter Abstreifer entfernt bei einer Drehung des Filterelementes die Schmutzteilchen, soweit dieser sie erfassen kann. Insbesondere die Schmutzteilchen, deren Größe etwa der Spaltbreite entspricht, bleiben jedoch im Spalt hängen. Außerdem werden Späne oder Fasern, die teilweise durch den Spalt gelangt sind, in der Spaltebene abgeschert. Ein Teil dieser Späne oder Fasern bleibt ebenfalls im Spalt zurück.

Diese im Spalt befindlichen Schmutzteilchen werden durch das Rückspülen des Filters entfernt. Das Rückspülen erfolgt dadurch, daß gereinigte Flüssigkeit in umgekehrter Flußrichtung durch den Spalt strömt und dabei die restlichen Schmutzteilchen mitnimmt und in einen Schmutzabfuhrkanal führt.

Die Schnittdarstellung des gesamten Aufbaus eines Spaltrohrfilters 41 zeigt Figur 2. Ein Filtergehäuse 14 weist einen Zulauf 15 für die zu reinigende Flüssigkeit und einen Ablauf 16 auf. Zwischen Zulauf und Ablauf befindet sich ein Filtereinsatz 31.

Der Filtereinsatz 31 besteht aus einem Filterelement 11, welches mit einer hier nur schematisch angedeuteten Profildrahtwicklung als Stützelement 10 versehen ist. Das Filterelement ist an einem Filterkopf 18, 19, 43, 24 befestigt. Der Filterkopf besteht zunächst aus einem Trägerelement 43, an dem sich eine Stützscheibe 19 befindet. An der Stützscheibe 19 sind Stehbolzen 20 angeordnet, die an dem unteren Ende eine Lagerscheibe 42 tragen. Die genannten Elemente sind stationär angeordnet. Das Filterelement 17 ist drehbar in dem gesamten Filtereinsatz 31 angeordnet, wobei an einer Welle 22 eine Trägerscheibe 44 befestigt ist. Diese Irägerscheibe liegt abdichtend an der Stützscheibe 19 an. Auf der gegenüberliegenden Seite der Trägerscheibe ist eine Abdeckscheibe 21 auf die Welle 22 aufgesteckt. Zwischen Trägerscheibe 44 und Abdeckscheibe 21 ist das Filterelement 17 angeordnet.

Die Verschlußscheibe 24 weist eine flüssigkeitsdichte Öffnung für die Welle 22 auf. Diese Welle dient mit dem Handrad 23 als manueller Antrieb für das Filterelement 17. Die Verschlußscheibe 24 ist mit hier nur schematisch angedeuteten Schraubverbindungen an dem Filtergehäuse 14 befestigt und dichtet die obere Öffnung des Filtergehäuses ab.

Am unteren Ende des Filtergehäuses 14 befindet sich ein Schmutzflüssigkeitsauslauf 25, der mit einem hier nicht dargestellten Ventil versehen ist. Dieser Schmutzflüssigkeitsauslauf 25 dient dazu, die sich am Boden des Filtergehäuses 14 absetzenden groben Schmutzpartikel auszutragen.

Eine Rückspüleinrichtung 28 besteht aus einem Schmutzabfuhrkanal 27, der sich über die gesamte wirksame Länge des Filterelements 17 erstreckt. Der Schmutzabfuhrkanal 27 weist an der zu der Oberfläche des Filterelements 17 gerichteten Seite eine Nute 29 auf, durch welche der rückgespülte Schmutz und die Rückspülflüssigkeit in den Schmutzabfuhrkanal 27 gelangen.

Die Rückspüleinrichtung 28 ist mit einer rückwärtigen Wand 30 versehen. In dieser Wand befindet sich eine Öffnung 34, an welcher ein Auslaufrohr 35 zum Austrag der Rückspülflüssigkeit vorgesehen ist. Dieses Auslaufrohr 35 verläuft durch einen flüssigkeitsdichten Wanddurchbruch des Filtergehäuses 14.

Das Filterelement 17 kann mittels des Handrades 23 gedreht werden. Anstelle des Handrades kann auch ein Getriebemotor, ein pneumatischer oder hydraulischer Antrieb oder auch eine Ratsche angewendet werden. Bei geöffnetem Auslaufrohr 35 wird die gesamte Umfangsfläche des Filterelements gereinigt.

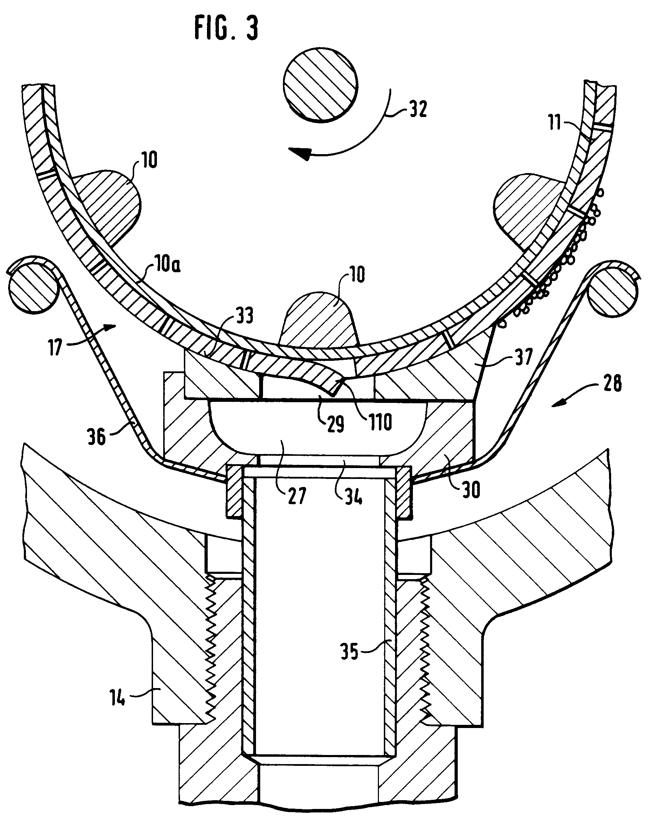

Figur 3 zeigt eine Rückspüleinrichtung in einer Schnittdarstellung. In dieser Figur ist die Filterplatte 11 sowie die Stützstäbe 10 des Filterelementes 10a gezeigt. Das Filterelement kann entlang des Pfeiles 32 gedreht werden. Die Rückspüleinrichtung 28 weist eine vordere, an die Oberfläche des Filterelementes 17 angepaßte Wand 33 auf, in der sich die Nut 29 befindet.

Ein Schmutzabfuhrkanal 27 wird durch eine rückwärtige Wand 30, die gleichzeitig als Gehäuse ausgebildet ist, umschlossen. In der rückwärtigen Wand befindet sich eine Öffnung 34, durch welche der Schmutz in ein Auslaufrohr 35 geleitet wird. Das Auslaufrohr 35 verläuft unmittelbar durch die Wandung des Filtergehäuses 14 nach außen.

Die Rückspüleinrichtung ist axial beweglich an dem Auslaufrohr 35 befestigt.Mehrere in axialer Richtung hintereinander angeordnete Federn 36 erzeugen eine Kraft auf die Rückspüleinrichtung 28 in Richtung des Filterelementes 17, so daß eine spaltfreie und damit flüssigkeitsdichte Anlage der Frontfläche 33 an dem Filterelement 17 gewährleistet ist.

Die Rückspüleinrichtung 28 weist an ihrem vorderen Bereich eine keilförmige Schneide 37 auf. Bei einer Drehung des Filterelementes 17 gemäß dem Pfeil 32 sorgt diese Schneide 37 dafür, daß der an der Oberfläche des Filterelementes anhaftende Schmutz entfernt wird. Dieser Schmutz setzt sich am Boden des Filtergehäuses ab und kann über einen Schmutzflüssigkeitsauslauf von Zeit zu Zeit entfernt werden. Das Auslaufrohr 35 ist mit einem hier nicht dargestellten Ventil versehen. Sobald dieses Ventil geöffnet wird, strömt die im Filterelement befindliche, gereinigte Flüssigkeit durch die Öffnung 29 in den Schmutzabfuhrkanal 27 und von dort über das Auslaufrohr 35 zu einem hier nicht dargestellten Schmutzsammelbecken.

Dieses Abreinigen der Oberfläche des Filterelementes und gleichzeitige Rückspülen kann kontinuierlich während des Filtriervorgangs oder auch nach bestimmten Zeitabständen erfolgen. Das Erfordernis der Abreinigung richtet sich nach dem anfallenden Schmutz und der Art des Schmutzes. So kann beispielsweise sehr feiner Schmutz ein kontinuierliches Rückspülen des Filterelementes erforderlich machen. Ist der anfallende Schmutz im Verhältnis zu der Spaltbreite relativ grob, dann genügt auch ein Abreinigen mittels der Schneide 37 und ein gelegentliches Rückspülen des Filters.

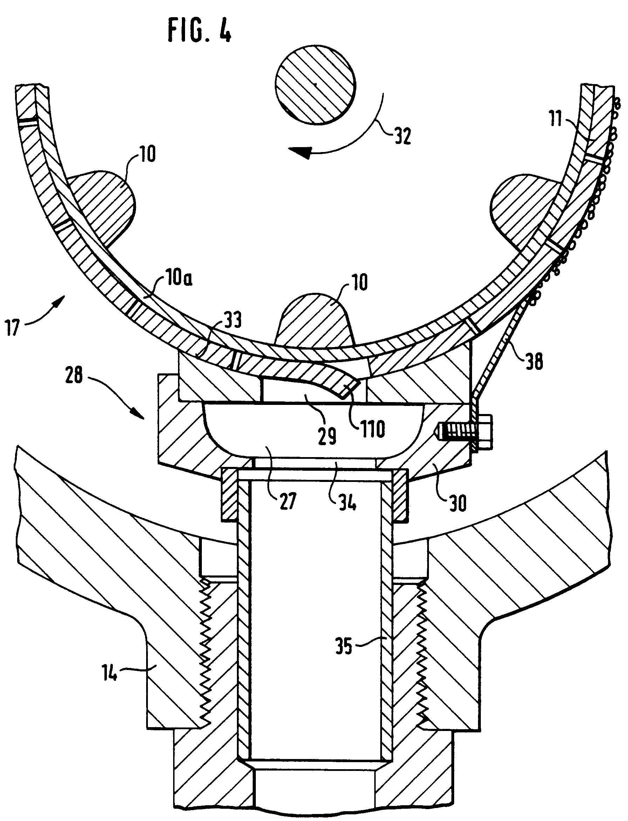

In Figur 4 ist eine Variante der in Figur 3 gezeigten Rückspüleinrichtung dargestellt. Anstelle einer Schneide 37 ist an der Wand 30 ein Abstreifer 38 befestigt. Dieser Abstreifer besteht beispielsweise aus Federstahlblech und ist an seinen dem Filterelement zugewandten Enden schneidenförmig ausgestaltet. Der Abstreifer liegt federnd an der Oberfläche des Filterelementes an und übernimmt damit das grobe Abreinigen der Oberfläche. Eine Feder, wie in Figur 3 gezeigt, ist bei dieser Ausführung nicht erforderlich, da die sichere Anlage der Rückspüleinrichtung am Filterelement 17 durch eine justierbare Befestigung an der Stützscheibe 19 und an der Lagerscheibe 42 erfolgt.

Als weitere Besonderheit können bei dieser Rückspüleinrichtung mehrere Nuten angeordnet sein. Jede dieser Nuten erstreckt sich über eine Teillänge des Filterelementes. Diese Nuten sind sowohl in Umfangsrichtung als auch in Axialrichtung des Filterelementes versetzt angeordnet und sorgen für eine höhere Stabilität der Wand 33, so daß die an anderer Stelle aufgeführten Stützen entfallen können.

Wie in den Figuren 3 und 4 dargestellt, werden die Federzungen im Bereich der Öffnung 29 aus ihrer Normallage heraus bewegt und in eine Offenstellung überführt. Der Schmutz kann so problemlos aus dem Spaltbereich entfernt werden. Durch die Wand 33 werden die gereinigten Federzungen wieder in ihre Ausgangsposition rückgeführt.

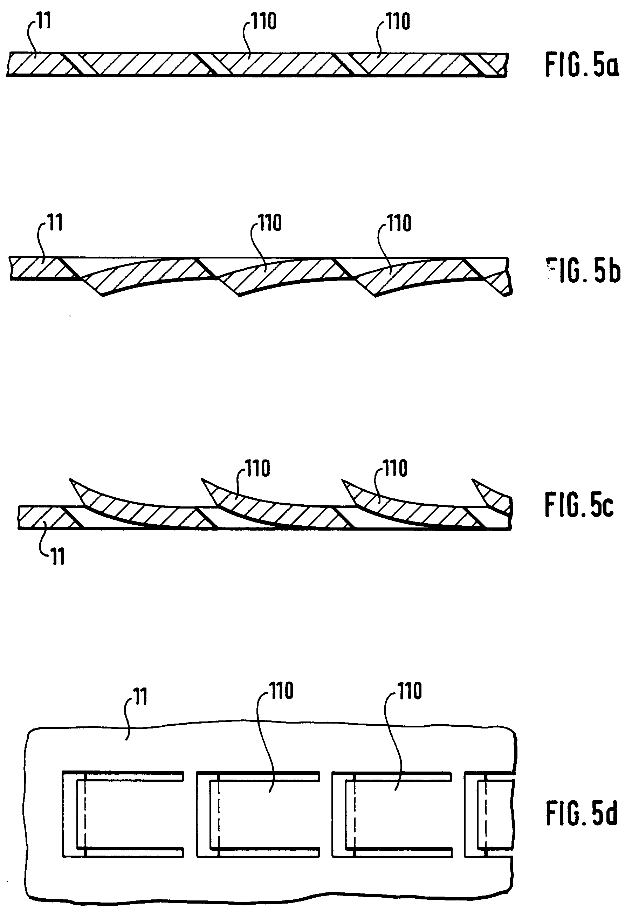

In Figur 5 ist eine weitere Variante von Federzungen dargestellt. Diese Federzungen können sich unmittelbar an der Filterplatte 11 abstützen. Hierzu ist die Filterplatte 11 jeweils in dem Bereich, in dem die Federzunge durchfedert leicht abgeschrägt.

Figur 5a zeigt die Grundstellung, bei der sich die Federzungen 110 in der Ruhelage befinden.

Figur 5b zeigt die Stellung im Betrieb, d.h. während des Filtervorgangs, wobei die Rohflüssigkeit von oben nach unten strömt. Durch den Anströmdruck der Rohflüssigkeit bewegen sich die Federzungen nach unten und legen sich an der Filterplatte 11 an.

Bei der Rückspülung bewegt sich gemäß Figur 5c die Federzunge 110 in die entgegengesetzte Richtung, so daß sich in dem Filterspalt festgesetzte Teilchen mühelos entfernen lassen.

Figur 5d zeigt eine Draufsicht auf die Filterplatte 11. Selbstverständlich besteht auch die Möglichkeit, anstelle der Abschrägung der Filterplatte im vorderen Bereich der Federzungen 110 die Filterplatte mit Noppen oder ähnlichem zu versehen. Wesentlich ist eine Abstützwirkung der Filterplatte 11, um ein Durchfedern der Federzungen zu vermeiden. Diese in Feder 5 gezeigte Variante ist dort sinnvoll anzuwenden, wo kein Stützelement für die Platte 11 oder nur eine punktuelle Abstützung der Platte 11 vorgesehen ist.

## Patentansprüche

1. Rückspülbares Flüssigkeitsfilter mit einem um seine Achse radial drehbaren, radial durchströmbaren, ein Filterelement (17) aufweisenden, hohlzylindrischen Filtereinsatz, der innerhalb eines Filtergehäuses (14) einen Filtratraum von einem Schmutzflüssigkeitsraum abtrennt, mit einer ortsfesten, einen Schmutzabfuhrkanal (27) aufweisenden, parallel zur Achse des Filterelementes (17) angeordneten Rückspüleinrichtung (28), wobei der Schmutzabfuhrkanal (27) über ein Absperrventil an eine Schmutzabfuhrleitung anschließbar ist und eine Antriebsvorrichtung (22, 23) für den Filtereinsatz vorgesehen ist, wobei der Filterkörper des Filterelementes (17) aus einer Platte (11) besteht, welcher mit schlitzförmigen, Federzungen (110) umschließenden Öffnungen versehen ist, wobei die Federzungen (110) sich in Richtung des Schmutzabfuhrkanals (27) bewegen können, wenn der Druck im Filtratraum größer ist als der Druck im Schmutzabfuhrkanal (27), und wobei der Rückspüleinrichtung (28) in Drehrichtung des Filterelementes (17) ein federnd gelagerter Abstreifer (38) vorgeschaltet ist zum Entfernen des auf der Oberfläche des Filterelementes (17) befindlichen Schmutzes, wobei der Schmutzabfuhrkanal (27) wenigstens eine Öffnung (29) zu der Oberfläche des Filterelementes (17) aufweist, durch welche Rückspülflüssigkeit in den Schmutzabfuhrkanal (27) gelangen kann.

2. Flüssigkeitsfilter nach Anspruch 1, dadurch gekennzeichnet, daß die Öffnung (29) zur Oberfläche des Filterelementes (17) eine parallel zur Achse des Filterelementes durchlaufende Nut ist.

3. Flüssigkeitsfilter nach einem der vorherigen Ansprüche, dadurch gekennzeichnet, daß das mit der Nut versehene Element der Rückspüleinrichtung (28) mittels am ruckwärtigen Ende des Schmutzabfuhrkanals (27) angeordneten Stützen abgesichert ist.

4. Flüssigkeitsfilter nach einem der vorherigen Ansprüche, dadurch gekennzeichnet, daß der der Rückspüleinrichtung (28) vorgelagerte Abstreifer (38) ein an der Rückspüleinrichtung (28) befestigtes Federstahlblech ist, dessen Kontaktfläche auf der Oberfläche des Filterelementes (17) parallel zur Achse des Filterelementes verläuft.

5. Flüssigkeitsfilter nach einem der vorherigen Ansprüche, dadurch gekennzeichnet, daß das Federstahlblech mit einer Messerschneide versehen ist, welche Fasern oder Schmutzpartikel auf der Oberfläche des Filterelementes (17) abscheren kann.

6. Flüssigkeitsfilter nach einem der Ansprüche 1 bis 5, dadurch gekennzeichnet, daß der Abstreifer ein keilförmiges Element (37) an der Rückspüleinrichtung (28) ist, wobei das keilförmige Element oder die Rückspüleinrichtung in radialer Richtung federnd gelagert ist und die Feder (36) eine Kraft auf den Abstreifer in Richtung des Filterelementes (17) erzeugt.

7. Flüssigkeitsfilter nach einem der vorherigen Ansprüche, dadurch gekennzeichnet, daß die schlitzförmigen Öffnungen jeweils eine Federzunge (110) umschließen.

8. Flüssigkeitsfilter nach einem der vorherigen Ansprüche, dadurch gekennzeichnet, daß der Filterkörper auf einem Stützelement angeordnet ist, wobei das Stützelement aus einem Stützkorb, einer Profildrahtwicklung oder einem Lochblech besteht.

9. Flüssigkeitsfilter nach Anspruch 7, dadurch gekennzeichnet, daß die Breite der Federzungen (110) zur Zungenwurzel hin abnimmt.

10. Flüssigkeitsfilter nach einem der vorherigen Ansprüche, dadurch gekennzeichnet, daß die Federzungen (110) sich an Noppen oder Stützflächen des Filterelements (11, 17) abstützen.

11. Verfahren zur Herstellung eines Flüssigkeitsfilters nach einem der vorhergehenden Ansprüche, dadurch gekennzeichnet, daß die schlitzförmigen Öffnungen (120) mittels Laserstrahl oder durch Ätzen aus dem Filterkörper (100) geschnitten werden.

12. Verfahren zur Reinigung eines Flüssigkeitsfilters nach einem der vorherigen Ansprüche 7 bis 10, dadurch gekennzeichnet, daß das Flüssigkeitsfilter derart rückgespült wird, daß der Druck auf der Seite des Reinflüssigkeitsraums des Filterelementes (17) höher als der Druck auf der Schmutzaustragsseit des Filterelementes (17) ist und die Federzungen (110) sich aus der Normallage in Richtung Schmutzaustragsraum bewegen und somit die schlitzförmigen Öffnungen (120) vergrößert werden.

## Claims

1. Back-flushable liquid filter, including a radially traversable, hollow-cylindrical filter insert, which is radially rotatable about its axis, has a filter element (17) and separates a filtrate chamber from an unfiltered liquid chamber within a filter housing (14), and including a stationary back-flushing arrangement (28), which has a dirt discharge duct (27) and is disposed parallel to the axis of the filter element (17), the dirt discharge duct (27) being able to communicate with a dirt discharge pipe via a shut-off valve, and a driving device (22, 23) is provided for the filter insert, the filter body of the filter element (17) comprising a plate (11), which filter body is provided with slot-like apertures which surround resilient projections (110), the resilient projections (110) being able to move in a direction towards the dirt discharge duct (27) when the pressure in the filtrate chamber is greater than the pressure in the dirt discharge duct (27), and a resiliently mounted scraper (38) being connected in front of the back-flushing arrangement (28), when viewed with respect to the direction of rotation of the filter element (17), to remove the dirt situated on the surface of the filter element (17), the dirt discharge duct (27) having at least one aperture (29) opening towards the surface of the filter element (17), through which aperture back-flushing liquid can pass into the dirt discharge duct (27).

2. Liquid filter according to claim 1, characterised in that the aperture (29) opening towards the surface of the filter element (17) is a groove extending parallel to the axis of the filter element.

3. Liquid filter according to one of the preceding claims, characterised in that the element, which is provided with the groove, of the back-flushing arrangement (28) is secured by means of supports disposed at the rear end of the dirt discharge duct (27).

4. Liquid filter according to one of the preceding claims, characterised in that the scraper (38), which is mounted in front of the back-flushing arrangement (28), is a resilient steel plate, which is secured to the back-flushing arrangement (28) and has a contact face extending along the surface of the filter element (17) parallel to the axis of the filter element.

5. Liquid filter according to one of the preceding claims, characterised in that the resilient steel plate is provided with a cutting edge which can shear off fibres or particles of dirt situated on the surface of the filter element (17).

6. Liquid filter according to one of claims 1 to 5, characterised in that the scraper is a wedge-shaped element (37) on the back-flushing arangement (28), the wedge-shaped element or the back-flushing arrangement being resiliently mounted in a radial direction, and the spring (36) producing a force on the scraper in a direction towards the filter element (17).

7. Liquid filter according to one of the preceding claims, characterised in that the slot-like apertures each surround a resilient projection (110).

8. Liquid filter according to one of the preceding claims, characterised in that the filter body is disposed on a supporting element, the supporting element comprising a supporting basket, a profiled wire coil or a perforate sheet.

9. Liquid filter according to claim 7, characterised in that the width of the resilient projections (110) decreases towards the base of the projection.

10. Liquid filter according to one of the preceding claims, characterised in that the resilient projections (110) are supported on knubs or supporting faces of the filter element (11, 17).

11. Method of producing a liquid filter according to one of the preceding claims, characterised in that the slot-like apertures (120) are cut from the filter body (100) by means of a laser beam or by etching.

12. Method of cleaning a liquid filter according to one of the preceding claims 7 to 10, characterised in that the liquid filter is back-flushed in such a manner that the pressure on the side of the filtered liquid chamber of the filter element (17) is higher than the pressure on the dirt discharging side of the filter element (17), and the resilient projections (110) move from the normal position in a direction towards the dirt discharging chamber and, in consequence, the slot-like apertures (120) are enlarged.

## Revendications

1. Filtre de rinçage à contre-courant pour liquides, comprenant :
- un insert filtrant cylindrique creux, pouvant tourner autour de son axe et comportant un élément filtrant (17) que peut traverser radialement le liquide, cet insert étant logé dans un boîtier de filtre (14) qu'il divise en une chambre de filtrat d'une chambre de liquide souillé, un dispositif de rinçage à contre-courant (28) fixe, monté parallèle à l'axe de l'élément filtrant (17) et comprenant un canal (27) d'évacuation des saletés qui peut être raccordé à travers une soupape d'arrêt à une conduite d'évacuation des saletés et un dispositif d'entraînement (22, 23) est prévu pour l'insert filtrant,
- tandis que le corps de l'élément filtrant (17) est composé d'une plaque (11) percée d'ouvertures en forme de fentes entourant des languettes élastiques (110) qui peuvent se déplacer en direction du canal (27) d'évacuation des saletés lorsque la pression dans la chambre du filtrat est supérieure à celle régnant dans le canal d'évacuation (27) du dispositif de rinçage à contre-courant (28)
- ou en amont du dispositif de rinçage à contre-courant par rapport au sens de rotation de l'élément filtrant (17) est disposé un racleur (38) monté élastiquement et servant à écarter de la surface de l'élément filtrant (17) les saletés qui s'y trouvent et le canal (27) d'évacuation des saletés présente au moins une ouverture (29) dirigée vers la surface de l'élément filtrant (17), permettant au liquide de rinçage à contre-courant de parvenir au canal d'évacuation (27).

2. Filtre selon la revendication 1,
caractérisé en ce que
l'ouverture (29) dirigée vers la surface externe de l'élément filtrant (17) est une rainure parallèle à l'axe de cet élément.

3. Filtre selon une des revendications précédentes,
caractérisé en ce que
l'élément du dispositif de rinçage à contre-courant portant la rainure est maintenu par des supports montés sur l'extrémité arrière du canal (27) d'évacuation des saletés.

4. Filtre selon une des revendications précédentes,
caractérisé en ce que
le racleur (38) monté en avant du dispositif de rinçage (28) est une tôle en acier élastique fixée sur le dispositif (28) et dont la portée de contact sur la surface de l'élément filtrant (17) est parallèle à l'axe de cet élément.

5. Filtre selon l'une des revendications précédentes,
caractérisé en ce que
la tôle en acier élastique présente un tranchant qui peut détacher, par sectionnement les fibres ou les particules de saleté se trouvant sur la surface de l'élément filtrant (17).

6. Filtre selon l'une des revendications précédentes,
caractérisé en ce que
le racleur est un élément (37) en forme de coin monté sur le dispositif de rinçage à contre-courant (28), cet élément ou le dispositif étant monté élastiquement en direction radiale, le ressort 36 exerçant sur le racleur une force dirigée vers l'élément filtrant (17).

7. Filtre selon l'une des revendications 1 à 5,
caractérisé en ce que
les ouvertures en forme de fentes entourent chacune une languette élastique (110).

8. Filtre selon l'une des revendications,
caractérisé en ce que
le corps du filtre est monté sur un élément de soutien qui peut être un panier de soutien, un enroulement de fils profilés, une tôle perforée.

9. Filtre selon la revendication 7,
caractérisé en ce que
la largeur des languettes élastiques (110) décroît en direction de leur talon d'aiguille.

10. Filtre selon l'une des revendications,
caractérisé en ce que
les languettes élastiques (110) s'appuient sur des tétons ou des portées d'appui de l'élément filtrant (11, 17).

11. Procédé de fabrication d'un filtre à liquide selon une des revendications précédentes,
caractérisé en ce que
les ouvertures (120) en forme de fentes sont découpées dans le corps (100) du filtre par un rayon laser ou par attaque chimique.

12. Procédé de nettoyage d'un filtre à liquide selon une des revendications précédentes 7 à 10,
caractérisé en ce que
le filtre est rincé à contre-courant, de manière que la pression sur la face de la chambre de rinçage propre de l'élément filtrant (17) soit plus élevée que la pression sur la face d'extraction des saletés de l'élément filtrant (17) et que les languettes élastiques (110) s'écartent de leur position normale en direction de la chambre d'extraction des saletés en augmentant ainsi les dimensions des ouvertures (120) en forme de fentes.
